# EUROPEAN PATENT SPECIFICATION

(11) **EP 3 647 709 B1**
(45) Date of publication and mention of the grant of the patent: **21.07.2021**
(21) Application number: 18275168.5
(22) Date of filing: 01.11.2018
(51) Int. Cl.: F28F 3/02, F28F 3/04, F28D 9/00, B22F 3/105

(54) **HEAT EXCHANGER DEVICE**
WÄRMETAUSCHERVORRICHTUNG
DISPOSITIF D'ÉCHANGEUR THERMIQUE

(43) Date of publication of application: 06.05.2020
(73) Proprietor: Hamilton Sundstrand Corporation, Charlotte, NC 28217 (US)
(72) Inventor: LEWANDOWSKI, Rafal, Charlotte, NC 28217 (US); POLLARD, Berwyn Owain, Charlotte, NC 28217 (US)
(74) Representative: Dehns

(56) References cited:
- EP-A1- 3 258 203
- GB-A- 2 539 915
- US-A1- 2008 149 313
- US-A1- 2017 023 308
- US-A1- 2018 045 472

## Description

The invention relates to a heat exchanger device and to a method for manufacturing a heat exchanger device. In an example implementation the heat exchanger device is for aerospace use US 2008/149313 discloses a heat exchanger device according to the preamble of claim 1.

Heat exchangers for transfer of heat between different fluids are very widely used and exist in various forms. Typically heat exchangers are arranged for flow of a primary fluid and a secondary fluid with heat being transferred between the two fluids as they flow through the device. Multi-stream heat exchangers for exchanging heat between more than two fluids also exist in the prior art. Some heat exchangers have a layered structure with a large number of parallel flow paths between plates that separate the flow paths. There may be 50-200 plates, or more, in this type of heat exchanger, typically with alternating hot/cold fluid flow paths either side of each plate. Such heat exchangers can also be referred to as laminate heat exchangers.

The plates generally have features to promote heat transfer and/or turbulent flow of the fluids, such as protrusions extending outward from the body of the plates into the flow of fluid. These features are referred to generally as fins, which includes various geometries of fins forming chambers within the flow passages, such as straight-finned triangular or rectangular arrangements; herringbone, where the fins are placed sideways to provide a zigzag path; serrated and/or perforated fins, which include cuts and perforations in the fins to augment flow distribution and improve heat transfer; as well as pin fins, where the pin fins comprise an array of pins formed as columnar shapes extending outward from the body of the plates, typically normal to the plane of the plates. These columnar shapes may be referred to individually as pins or pin fins, and heat exchangers using this type of arrangement are generally described as pin fin heat exchangers.

US 8616269 discloses an example of a pin fin heat exchanger device with multiple layers. Multiple double sided plates are arranged in a stack with spaces between surfaces of the plates and adjacent plates enclosing fluid flow paths for a first fluid and a second fluid. Pins extend from one or both sides of the plates toward the adjacent plate(s), so that the pins extend into the fluid flow paths. The pins can be formed separately to the plates and mounted to the plates. In particular, the pins are inserted through the plates using through holes. Alternatively the pins can be formed integrally with the plate or plates by chemical etching. The pins can pass through multiple plates. In some cases the pins extending from one plate may have their ends facing the ends of pins extending from the adjacent plate, in which case the heat exchanger device of US 8616269 is formed with a gap between the pin ends.

GB 2552956 discloses another example of a pin fin heat exchanger device with multiple layers. The double sided plates are arranged in a stack with the spaces between the surfaces enclosing a fluid flow path. The fluid flow path is formed by a number of pin fins extending between the adjacent surfaces into the fluid flow path and the outer ends off the fins are bonded to the fins of the adjacent plates or between the fins on the adjacent plates. The arrangement of the pin fins allows for a less rigid arrangement of the pin fins within each fluid flow path. The pins of the double sided plate can be aligned together or they can be offset slightly, this provides a means for altering the flow path of the primary and secondary fluid to increase heat transfer.

During the assembly of conventional pin fin heat exchangers made of a plurality of plates, it is typical for the pin fin heads to be joined to the adjacent plate, typically by a braze joint. When under pressures present during operation, this joint may fail if not properly formed. This failure can lead to a chain reaction in the adjacent joints that can result in failure of the unit. In instances where the joint does not fail completely, voids may form. These voids can trap pieces of sediment that may be removed from the heat exchanger surfaces by the fluid. These pieces of sediment disrupt the flow in the fluid flow path and lead to recued thermal efficiency of the heat exchanger. These voids in the braze joints result in reduced active area of the joint and hence reduce the thermal performance of the overall heat exchanger. As a result, conventional heat exchangers are over-engineered, at extra cost, with additional design margins to account for this possible reduced efficiency. There is therefore a need to provide a heat exchanger with an improved braze joint.

Viewed from a first aspect, the invention provides a multilayer heat exchanger device comprising a stack of plates arranged to provide multiple fluid flow paths separated by the plates, wherein at least some of the plates are pin fin plates that each have an array of pins extending outwards from at least one side of the pin fin plate into the fluid flow paths; wherein each pin comprises an inner end integrally formed with the pin fin plate, a mid-point along a longitudinal axis of the pin, and an outer end bonded to an adjacent plate; wherein the cross sectional area of the pin at the outer end is larger than the cross-sectional area at the mid-point; and wherein the cross sectional area of the outer end is larger than the cross sectional area of the inner end.

This offers the technical advantage of increasing the surface area of the outer end that is bonded to the adjacent plate, i.e. to a facing surface of the adjacent plate. This may for example be bonding via a brazed joint. As more surface area is present at the outer end then the bond will be stronger and less likely to fail. This advantage allows heat exchangers to be manufactured with a smaller design margin, as the possibility of failure is reduced. This can reduce the cost and complexity of manufacture. This increase in strength, and hence reduced risk of failure, can also mean that less maintenance is required. Reduced maintenance will be advantageous for any application of heat exchanger, and has particular benefits in aerospace applications where maintenance has serious effects on the cost efficiency of an aircraft. An additional advantage may be that due to the greater strength of the bond between the outer end and the adjacent plate (e.g. via the brazing joint), there is a possibility that less bonding material is required (e.g. adhesive, or brazing material); this can further reduce the cost of manufacture and also reduce the weight of the component once assembled. This can be particularly advantageous for aerospace applications, and will also have benefits for other applications of heat exchangers where weight saving is important.

A multilayer heat exchanger device of the type set out in the first aspect has many layers with multiple fluid flow paths each being arranged for heat exchange with adjacent fluid flow paths. The fluid flow paths may all be in parallel planes, and may have parallel flow paths with the same or opposed directions of flow. Thus, the plates may be generally planar in order that adjacent plates enclose a fluid flow path with the principle flow direction being parallel with the planes of the adjacent plates. Alternatively, the plates may have curved shapes with adjacent plates formed as concentric or otherwise complementary curves, with the principle flow direction being along a curved surface of the plates.

A typical heat exchanger device has primary and secondary fluids flowing in adjacent paths in different directions, which maximises the temperature differential between the fluids and thus gives the greatest rate of heat transfer. Such a heat exchanger device is to be differentiated from a heat sink in that heat transfer is promoted via flow of the fluid through the flow paths rather than occurring with passive convection of fluid away from the heat exchange elements as it is heated or cooled. Thus, the heat exchanger may be arranged for forced flow of fluid through the fluid flow paths, for example by being coupled via fluid inlets and outlets to incoming and outgoing fluid passages with a differential pressure. The fluid inlets and outlets may be common to multiple flow paths along multiple sets of plates, for example with a first set of inlets and outlets for a first fluid and a second set of inlets and outlets for a second fluid, the first and second fluids having different temperatures at the respective inlets and heat being transferred between the first and second fluids as they flow through the heat exchanger.

The heat exchanger device may be for use with any required combination of fluids, such as liquid-liquid, liquid-gas or gas-gas heat exchange. The heat exchanger may use air for heating or cooling of another fluid. In some examples the heat exchanger is for aerospace use and the invention thus extends to an aircraft including the heat exchanger device. In context of aerospace use the fluids could include two or more of: atmospheric air, cabin air, engine oil, generator oil, coolant, fuel and so on. Any combination of these fluids can be used within the same heat exchange deice, it is not limited to two types of fluid. The fluid used depends on the requirements of the heat exchanger as different fluid will have different thermal and fluidic properties. Some fluid will move with a lower/higher velocity than others which may be preferable in certain situations to provide the necessary thermal transfer.

Flow paths defined between generally planar plates will be in parallel planes, with heat transfer occurring generally perpendicular to the planes. The heat exchanger device may be arranged with multiple identical flow paths formed by repeating plates. This might be used with alternating fluids in adjacent flow paths, such that a first fluid flows through the first, third and subsequent flow paths, and a second fluid flows through the second, fourth and subsequent flow paths. Alternatively there may be a need for a greater flow cross-section for one fluid, in which case that fluid may be flowed through two adjacent flow paths alternating with one flow path for another fluid, such as by having a first fluid in the first, fourth and seventh flow paths and subsequently in every third flow path and a second fluid in the second and third flow paths, then the fifth and sixth flow paths, and so on.

A further advantageous effect of the increased area of one section of the pins relative to the mid-point is that the area of the flow path between each pin is reduced. This results in an increased flow velocity hence the residency time for a given particle at a location is reduced which increases the thermal transfer performance of the device. Additionally, a smaller are of flow path will increase the Reynolds number of the flow and will tend to more turbulent flow which will further increase the thermal transfer performance of the device.

Multiple pins are distributed across the surface of each of the pin fin plates within the stack of plates. It is preferable that each stack within the stack of plates has a similar distribution to each other. As discussed above, the fluids used will have different thermal and fluidic properties and may therefore require different flow conditions, hence different fin arrangements may be used for different plates within a stack of plates a heat exchanger.

The pin fins of the heat exchange device as described in the first aspect device may be columnar in nature. The pin fins may have cross section that circular. Alternatively, the pin fins may have a cross section that is polygonal such as rectangular. The inner end may have a cross section that is circular and the outer end may have a cross section that is polygonal or vice versa. In examples where the cross section is circular this change in cross sectional may be a gradual, either linear or slightly curved, or it may be over a series of steps.

As described in the first aspect, the area of the outer end is larger than the area at the mid-point of the pin fin, this increase in area from the mid-point may be linear, or it may be stepped. The stepped increase may be in one or more steps. In cases where the cross section increases linearly, the increase may be at an angle between 5 and 10 degrees, optionally between 6.5 and 8.5 degrees.

The increase towards the free surface may increase linearly at an angle between 5 and 10 degrees.

In some examples the smallest cross section may be at the mid-points. Alternatively the smallest cross section will be at a point between the mid-point and the inner end of the pin fin. The cross section of the inner end may be greater than the cross section of the mid-point of the inner fin. Alternatively the cross section of the inner end may be smaller than the mid-point or it may be equal to the mid-point. The middle section of the pin fin may be a constant cross section or the cross section may be increasing or decreasing.

The term mid-point may be defined as a point or a region in a section of the pin that is substantially equidistant from the inner end and the outer end of the pin, along the longitudinal axis. The mid-point region may extend up to 25% the length of the pin in either direction of the point that is equidistant from the inner and outer end of the pin. Optionally the mid-point region may extend up to 10% the length of the pin in either direction of the point that is equidistant from the inner and outer end of the pin.

The increase in cross section of the pin from the smallest to largest may be between 5% and 50%, optionally between 10% to 40%, optionally between 20% and 30%.

In some examples the geometry of each pin fin may be the same across the entire surface of the plate. In other examples, the geometry of the pin fins may vary across the plate. For example, in areas of high stress it may be preferable to have a greater area at the brazed joint, and/or to have a greater area at the integrally formed joint and hence in areas expected to bear higher stresses the pins may have larger cross sectional areas at one or both ends. In addition it may be beneficial to provide a different shape of the outer or inner surface for different pin fins on one plate.

The outer ends of the pins may be shaped in a way that they can be effectively bonded to an adjacent plate. For example they may be flat in order to be bonded with a flat surface or they may be curved in order to bond with a matching curved surface.

The pins may have any suitable size or shape, and the spacing between the pins and/or adjacent plates can be set as required based on the intended use of the heat exchange device. For example the pin may range in width between 0.5mm to 5mm, optionally the pin fin width may range between 1mm and 3mm. The spacing between the pin fins within a plate may be similar in size as the width of the pin, hence the spacing may be in a range of 0.5mm to 5mm, optionally between 1mm and 3mm. Alternatively the spacing between the pins may be up to five times the width of the pins, optionally between one or two times the width of the pin, optionally less that the width of the pin. The height of the pins may also vary depending on the volume of fluid passing between the adjacent plates and the required flow path. The height of the pin may be up to five times the minimum width of the pin, optionally one or two times the minimum width of the pins.

It can be advantageous to have the pins relatively close together as this reduces the area of the fluid flow path, hence increasing the fluid velocity. Additionally, increasing the number of pins increases the heat transfer by maximising the ratio of the exposed surface area of the fins to the volume of the fluid in the flow path.

The distribution of pins may be the same for each pin fin plate of the multilayer heat exchanger, alternatively some plates may have more or less spacing between pins. Optionally the pin geometries can vary for each plate depending on the requirement of the heat exchanger or the properties of the fluid used. Differences in pin geometries can be changes in diameter or the variations in cross sectional area along the longitudinal axis as discussed above. The variation in pin geometry and spacing for different plates can be in combination or separately.

The pins may form an array with pins distributed across the body of the plate in a grid pattern, such as a square grid pattern or diamond grid pattern. A diamond grid pattern in this sense has a line between opposite corners of the diamond aligned with the flow direction of the fluid flow path, whereas a square grid pattern has two sides of the square aligned with the flow direction. A diamond grid pattern has adjacent rows of pins that are staggered and this can aid heat transfer. The geometry and size of the pins within the array may differ as discussed above.

The heat exchanger is a multilayer structure with multiple plates, optionally with the plates arranged in a repeating pattern in respect to the flow of fluids. There may for example be at least 40 plates, optionally at least 60 plates and in some cases 100 or more plates. In some cases at least half of the plates are pin fin plates with pins as discussed herein. All of the plates may be pin fin plates. The size and flow capacity of the heat exchanger device increases with the addition of more plates, which adds more flow paths, and thus more plates may be added as required to provide the necessary performance. The heat exchanger device may have a laminate structure, with the multiple plates coupled together by the bonding of the pin ends to adjacent plates and optionally also by a frame or supporting structure that clamps the plates together. The thickness of the heat exchanger device as a whole is set by the total plate thickness, which includes the pin height.

The heat exchanger device may be provided as a part of a larger heat exchanger system, with this larger heat exchanger system comprising fluid inlet and outlet passages as well as optionally other features such as a frame for supporting the plates and manifold structures for distribution of fluid to the flow paths. The heat exchanger device may include end plates of differing form to provide an outside surface of the heat exchanger device having no pins.

The manifolds may include a least a primary fluid inlet manifold, primary fluid outlet manifold, a secondary fluid inlet manifold and a secondary fluid outlet manifold. Thus, the heat exchanger device may be used for heat exchange with at least two fluids. Further manifolds could be added to allow for multistream arrangements with more than two fluids.

Viewed from a second aspect, the invention provides a method for manufacturing a multi-layered heat exchanger device comprising: forming a pin fin plate to be arranged in a stack of plates, each pin fin plate having an array of heat exchanger pins extending outward to an outer end, each pin comprising an inner end integrally formed with the plate and a mid-point between the inner and outer end, wherein the cross sectional area of the pin is greater at the outer end than at the mid-point and wherein an adjacent plate is bonded to the pins at their outer ends; and wherein the cross sectional area of the outer end is larger than the cross sectional area of the inner end.

The method may include providing the heat exchanger device with any of the features discussed above in connection with the first aspect.

The pin may be formed by a process of subtractive manufacturing. Starting from a solid block of material, the pin may be constructed by successively cutting away material until the desired size and shape is formed. This process can be done by typical manufacturing machines such as CNC machines. In some examples the pin fin plates may be machined using a cutting tool with the inverse shape compared to the desired shape of the pins. When forming a complete plate with a plurality of pins for use within a stack of plates, the process would begin with a block the required area of the final plate and the required maximum height of the pins.

An alternative method of manufacture involves additive manufacturing. This may allow for more rapid production of the pin fin heat exchanger plates, especially if complex shapes or irregular geometries are required. In particular, additive manufacturing methods may be advantageous to allow for varying designs for different plates.

The choice of manufacturing process may be determined by the required strength and thermal properties of the pin fin heat exchanger, as each manufacturing method is better suited to certain materials that may have more preferable properties for the requirements.

Preferred embodiments of the invention are described below by way of example only and with reference to the accompanying drawings.
Figure 1 is a cross section view showing a first pin geometry;
Figure 2 is a cross section view showing another pin geometry;
Figure 3 is a cross section view showing another pin geometry;
Figure 4 is a cross section view showing another pin geometry;
Figure 5 shows an example of a typical stack of heat exchange plates separated by pin fins, for example using pin fin plates with pins according to any Figures 1 to 4; and
Figure 6 shows a typical pin fin being manufactured using machining techniques.

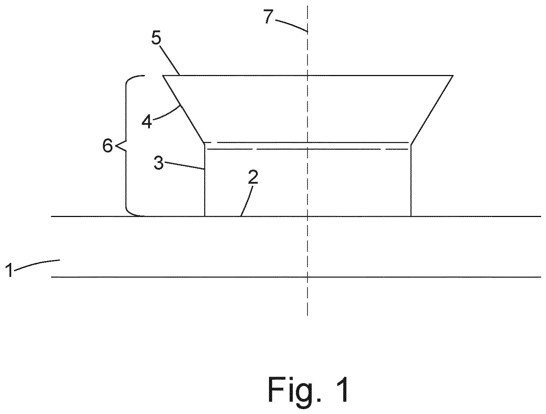

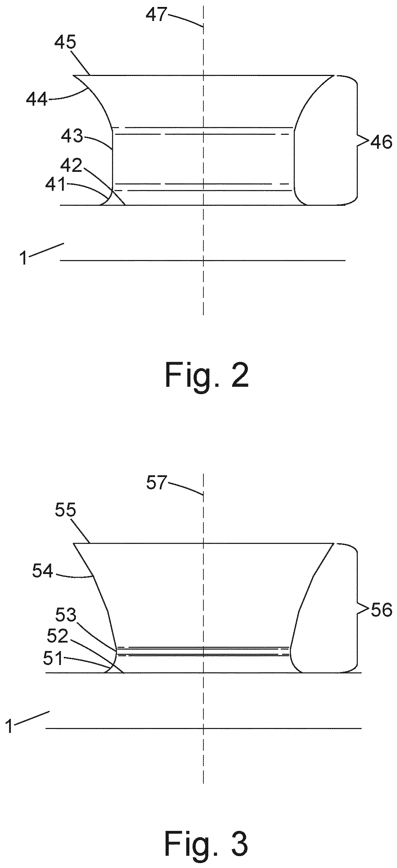

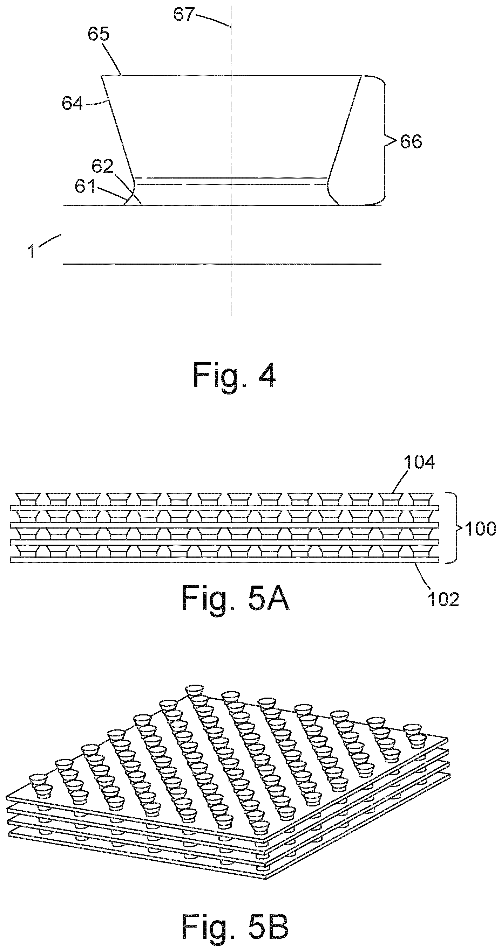

The proposed heat exchanger device can be considered an improvement over known pin fin designed due to the geometry of the pins that are used with pin fin plates. Figure 1 illustrates one proposed geometry for the pins to be formed integrally with the pin fin plates. These pin fin plates (and likewise pin fin plates with pins as shown in any of Figures 2 to 4) could be used in a heat exchanger with a stack of heat exchange plates as described below with reference to Figure 5. In Figure 1 the pin fin plate 1 is one of a plurality of plate surfaces within a stack of plates forming the heat exchanger. The pin 6 is integrally mounted to the plate 1 at the inner end of the pin fin. The pin 6 extends from the plate along a longitudinal axis 7. The pin 6 comprises two main sections, a first section 3 extends from the plate with a constant cross section. A second section 4, positioned further from the pin fin plate 1 than the first section 3 along the longitudinal axis 7, extends from the pin fin plate 1 with a linearly increasing cross section, such that the side walls of the pin are diverging, until an outer end 5 is reached, such that the cross section of the outer end 5 is larger than the inner end 2. The cross section of the pin 6 in figure 1 is typically circular, therefore the first section 3 is cylindrical and the second section 4 is conical in shape.

The increase in cross section of the pin starts from the mid-point of the pin 6 along the longitudinal axis 7. The skilled person would appreciate that this increase can start from any point along the longitudinal axis.

The cross section of the outer end 5 is between 5% and 50% larger than the cross section of the inner end of the pin 6. The angle of the linear increase from the cylindrical section to the outer surface is between 5° and 45°. This angle depends on the required cross section of the outer end 2 compared to the inner end 5 and the starting point along the longitudinal axis 7 of the linear increase.

Figure 1 shows one of the possible pin geometries. Different pin geometries can be used for other plates or for different parts of the same plate.

Figures 2 and 3 show other alternative pin geometries. In the figures the inner end 42, 52 has a smaller cross sectional area than the outer end 45, 55 and the pins are made of three distinct sections. A first section 41, 51 extends from the inner end 42, 52 of the pin 46, 56 along the longitudinal axis 47, 57 in a direction away from plate 1. The cross sectional area of the first section 41, 51 decreases exponentially, such that the side wall of the first section is converging. A second section 53, 43 extends from the end of the first section 42, 52 along the longitudinal axis 47, 57 in the direction away from the plate 1. The second section 43, 53 extends in the direction of the longitudinal axis with a constant cross sectional area. A third section 44, 54 extends from the end of the second section along the longitudinal axis 47, 57 in a direction away from the plate 1. The third section 44, 54 extends from the end of the second section to outer end 45, 55 of the pin 46, 56. The cross sectional area of the third section 44, 54 increases exponentially, such that the side wall of the third section 44, 54 is diverging. The divergence of the third section 44, 54 is greater in magnitude than the convergence of the first section 41, 51 such that the cross sectional area of the outer end 45, 55 is larger than the inner end 42, 52.

The size of the three sections as a proportion of the total height of the pin can vary. As an example the first section in Figures 2 and 3 are approximately 15% of the distance between the inner and outer end of the pin. In Figure 2, the second section is approximately 45% of the total distance between the inner and outer end of the pin, while in Figure 3, the second section is approximately 5% of the total distance between the inner and outer end of the pin. In Figure 2, the third section is approximately 40% of the total distance between the inner and outer end of the pin, while in Figure 3, the third section is approximately 80% of the total distance between the inner and outer end of the pin. In some cases the proportion of the third section can be zero, so that the side wall of the pin forms complete parabolic curve between the inner and outer end of the pins with no distinct section where the side wall is parallel to the longitudinal axis.

Another possible geometry is shown in Figure 4. The pin 66 comprises two distinct sections. As in the pins shown by Figures 2 and 3, the first section extends from the inner end 62 of the pin along the longitudinal axis 67, in the direction away from the plate 1. The cross sectional area of the first section is exponentially decreasing similar to the first section of the pins shown in Figures 2 and 3. The side wall of the first section 61 converges until it is approximately parallel to the longitudinal axis 67. The second section 64 extends from the end of the first section 61 to out end 65 of the pin. The cross sectional area of the second section 64 linearly increases, such that the side walls are diverging and such that the cross sectional area of the outer end 65 is greater than the inner end 62. As is the case with the other possible pin geometries the relative proportions of each section may differ. As an example, in Figure 4, the first section is 20% the total distance between the inner and outer end, and the second section is approximately 80% of the total distance between the inner and outer ends of the pin 66. The area of the outer end may be between 5% and 50% larger than the minimum cross sectional area of the pin 66. The angle of the linear increase of the cross sectional area of the second section 64 may be between 5° and 45° depending on the required area of the outer end 65 and the minimum cross sectional area of the pin 66.

Figures 5A and 5B show a stack of heat exchange plates 100. Each plate 102 is separated by an array of pins 104. The geometry of the pin can be according to any of the possibilities shown in Figures 2 to 4, or variations thereof depending on the requirement of the fluid used in each flow paths, or the structural requirements. As will be appreciated from Fig. 5A, the spacing between each plate is determined by the height of the pins. In most cases the each pin attached to one plate will have same plate, however to accommodate for the possibility of curved plates the pins within a certain plate may differ in height.

Figures 5A and 5B also show an even spacing of pins throughout the heat exchange device. It is possible to use different types of fluid in each layer of the heat exchanger, which may have different fluid characteristics and will therefore require different flow paths. Therefore, it may be necessary for the spacing between pins to be different for each plate depending on the fluid used.

Figure 5B shows the pins arranged in a diamond pattern, however they can also be arranged in a square pattern or alternatively the pins can be arranged in an irregular pattern. It is also possible for the pin on each plate within a stack of plates to be arranged with a different pattern as each fluid type will be better suited to a particular arrangement of pins.

In the stack of plates the inner end of each pin 104 is integrally formed as part of the plate and the outer end of each pin is free. When assembled as a stack the outer end is joined to the bottom surface of the adjacent plate by brazing. The larger area of the free end provides a stronger braze joint.

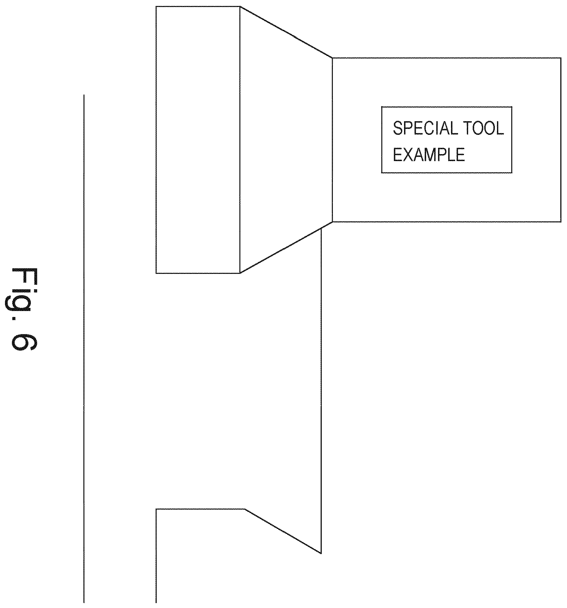

Figure 6 shows a typical tool used for manufacturing the pin fin plate for use in a heat exchanger by subtractive manufacturing. The tool is required to match with the outer surface of the pin, and therefore to manufacture the different pin geometries shown in Figures 1 to 4, then a different tool is required in each case.

As an alternative the pin fin plate can be produced using additive manufacturing. This method allows for different pin geometries to be manufactured without the need for redesigning the tools. In additional additive manufacturing may be capable more rapidly producing the pin fin plates, especially where there are complex geometries or if there is a requirement for varying geometry, size or spacing for different plates.

## Claims

1. A multilayer heat exchanger device comprising:
a stack of plates arranged to provide multiple fluid flow paths separated by the plates;
wherein at least some of the plates are pin fin plates that each have an array of pins extending outwards from the pin fin plate into the fluid flow paths; and
wherein each pin comprises an inner end integrally formed with the pin fin plate, a mid-point along a longitudinal axis of the pin, an outer end bonded to an adjacent plate;
wherein the cross sectional area of the pin at the outer end is larger than the cross sectional area at the mid-point; and
**characterised in that** the cross sectional area of the outer end is larger than the cross sectional area of the inner end.

2. A multilayer heat exchanger device as claimed in claim 1, wherein the array of pins is distributed across the body of the plate in a grid pattern.

3. A multilayer heat exchanger device as claimed in claim 2 wherein the array of pins have the same distribution across the body of each plate within the stack of plates.

4. A multilayer heat exchanger device as claimed in any preceding claim, wherein the pins have a circular cross section.

5. A multilayer heat exchanger device as claimed in any preceding claim, wherein any change in cross sectional area is linear along the longitudinal axis of the pin.

6. A multilayer heat exchanger device as claimed in any of claims 1 to 4, wherein any change in cross sectional area is exponential along the longitudinal axis of the pin.

7. A multilayer heat exchanger device as claimed in any preceding claim, wherein the outer ends of the pins are bonded to the adjacent plate by brazing.

8. A multilayer heat exchanger device as claimed in any preceding claim, wherein the pins have a width in the range 0.5 to 5 mm, optionally in the range in 1 to 3 mm.

9. A multilayer heat exchanger device as claimed in any preceding claim, wherein the spacing between the pins is similar to the width of the pins, optionally the spacing between the pins is between 1 and 2 times the width of the pins, optionally the spacing between the pins is up to 5 times the width of the pins.

10. A multilayer heat exchanger device as claimed in any preceding wherein the increase in cross sectional area from the minimum point to the outer end is between 5% and 50%, optionally between 10% and 40%, optionally between 20% and 30%.

11. A method of manufacturing a multilayer heat exchanger device comprising:
forming a pin fin plate to be arranged in a stack of plates, each pin fin plate having an array of heat exchanger pins extending outward from the pin fin plate to an outer end of the pin;
each pin comprising an inner end integrally formed with the plate and a mid-point between the inner and outer end;
wherein the cross sectional area of the pin is greater at the outer end than at the mid-point and wherein an adjacent plate is bonded to the pin at the outer end; and
wherein the cross sectional area of the outer end is larger than the cross sectional area of the inner end.

12. A method as claimed in claim 11, wherein each pin fin plate is formed by a process of subtractive manufacturing.

13. A method as claimed in claim 11, wherein each pin fin plate is formed by a process of additive manufacturing.

## Patentansprüche

1. Mehrschichtige Wärmetauschervorrichtung, umfassend:
einen Stapel von Platten, die angeordnet sind, um mehrere Fluidströmungswege, die durch die Platten getrennt sind, bereitzustellen;
wobei mindestens einige der Platten Pin-Fin-Platten sind, die jeweils ein Array von Stiften aufweisen, das sich auswärts von der Pin-Fin-Platte in die Fluidströmungswege erstreckt; und
wobei jeder Stift ein inneres Ende, das mit der Pin-Fin-Platte einstückig ausgebildet ist, einen Mittelpunkt entlang einer Längsachse des Stifts, ein äußeres Ende, das an eine angrenzende Platte gebunden ist, umfasst;
wobei der Querschnittsbereich des Stifts an dem äußeren Ende größer als der Querschnittsbereich an dem Mittelpunkt ist; und
**dadurch gekennzeichnet, dass** der Querschnittsbereich des äußeren Endes größer als der Querschnittsbereich des inneren Endes ist.

2. Mehrschichtige Wärmetauschervorrichtung nach Anspruch 1, wobei das Array von Stiften über den Körper der Platte in einem Gittermuster verteilt ist.

3. Mehrschichtige Wärmetauschervorrichtung nach Anspruch 2, wobei das Array von Stiften dieselbe Verteilung über den Körper jeder Platte innerhalb des Stapels von Platten aufweist.

4. Mehrschichtige Wärmetauschervorrichtung nach einem der vorhergehenden Ansprüche, wobei die Stifte einen kreisförmigen Querschnitt aufweisen.

5. Mehrschichtige Wärmetauschervorrichtung nach einem der vorhergehenden Ansprüche, wobei jegliche Änderung an dem Querschnittsbereich linear entlang der Längsachse des Stifts verläuft.

6. Mehrschichtige Wärmetauschervorrichtung nach einem der Ansprüche 1 bis 4, wobei jegliche Änderung an dem Querschnittsbereich exponentiell entlang der Längsachse des Stifts verläuft.

7. Mehrschichtige Wärmetauschervorrichtung nach einem der vorhergehenden Ansprüche, wobei die äußeren Enden der Stifte durch Hartlöten mit der angrenzenden Platte verbunden sind.

8. Mehrschichtige Wärmetauschervorrichtung nach einem der vorhergehenden Ansprüche, wobei die Stifte eine Breite in dem Bereich von 0,5 bis 5 mm, optional in dem Bereich von 1 bis 3 mm, aufweisen.

9. Mehrschichtige Wärmetauschervorrichtung nach einem der vorhergehenden Ansprüche, wobei der Abstand zwischen den Stiften ähnlich der Breite der Stifte ist, der Abstand zwischen den Stiften optional zwischen 1- und 2-mal die Breite der Stifte ist, der Abstand zwischen den Stiften optional bis zu 5-mal die Breite der Stifte ist.

10. Mehrschichtige Wärmetauschervorrichtung nach einem der vorhergehenden Ansprüche, wobei die Vergrößerung im Querschnittsbereich von dem Mindestpunkt zum äußeren Ende zwischen 5 % und 50 %, optional zwischen 10 % und 40 %, optional zwischen 20 % und 30 %, liegt.

11. Verfahren zur Herstellung einer mehrschichtigen Wärmetauschervorrichtung, umfassend:
Ausbilden einer in einem Stapel von Platten anzuordnenden Pin-Fin-Platte, wobei jede Pin-Fin-Platte ein Array von Wärmetauscherstiften aufweist, das sich auswärts von der Pin-Fin-Platte zu einem äußeren Ende des Stifts erstreckt;
wobei jeder Stift ein inneres Ende umfasst, das mit der Platte und einem Mittelpunkt zwischen dem inneren und äußeren Ende einstückig ausgebildet ist;
wobei der Querschnittsbereich des Stifts größer an dem äußeren Ende als an dem Mittelpunkt ist und wobei eine angrenzende Platte mit dem Stift an dem äußeren Ende verbunden ist; und
wobei der Querschnittsbereich des äußeren Endes größer als der Querschnittsbereich des inneren Endes ist.

12. Verfahren nach Anspruch 11, wobei jede Pin-Fin-Platte durch ein subtraktives Fertigungsverfahren ausgebildet ist.

13. Verfahren nach Anspruch 11, wobei jede Pin-Fin-Platte durch ein Additivherstellungsverfahren ausgebildet ist.

## Revendications

1. Dispositif d'échangeur thermique multicouche comprenant :
un empilement de plaques agencées pour fournir de multiples chemins d'écoulement de fluide séparés par les plaques ;
dans lequel au moins certaines des plaques sont des plaques à ailettes à broches qui ont chacune un réseau de broches s'étendant vers l'extérieur depuis la plaque à ailettes à broches dans les chemins d'écoulement de fluide ; et
dans lequel chaque broche comprend une extrémité intérieure formée d'un seul tenant avec la plaque à ailettes à broches, un point médian le long d'un axe longitudinal de la broche, une extrémité extérieure liée à une plaque adjacente ;
dans lequel la section transversale de la broche au niveau de l'extrémité extérieure est plus grande que la section transversale au niveau du point médian ; et
**caractérisé en ce que**
la section transversale de l'extrémité extérieure est plus grande que la section transversale de l'extrémité intérieure.

2. Dispositif d'échangeur thermique multicouche selon la revendication 1, dans lequel le réseau de broches est distribué à travers le corps de la plaque selon un motif en grille.

3. Dispositif d'échangeur thermique multicouche selon la revendication 2, dans lequel le réseau de broches a la même distribution à travers le corps de chaque plaque à l'intérieur de l'empilement de plaques.

4. Dispositif d'échangeur thermique multicouche selon une quelconque revendication précédente, dans lequel les broches ont une section transversale circulaire.

5. Dispositif d'échangeur thermique multicouche selon une quelconque revendication précédente, dans lequel tout changement de section transversale est linéaire le long de l'axe longitudinal de la broche.

6. Dispositif d'échangeur thermique multicouche selon l'une quelconque des revendications 1 à 4, dans lequel tout changement de section transversale est exponentiel le long de l'axe longitudinal de la broche.

7. Dispositif d'échangeur thermique multicouche selon une quelconque revendication précédente, dans lequel les extrémités extérieures des broches sont liées à la plaque adjacente par brasage.

8. Dispositif d'échangeur thermique multicouche selon une quelconque revendication précédente, dans lequel les broches ont une largeur dans la plage allant de 0,5 à 5 mm, éventuellement dans la plage allant de 1 à 3 mm.

9. Dispositif d'échangeur thermique multicouche selon une quelconque revendication précédente, dans lequel l'espacement entre les broches est similaire à la largeur des broches, éventuellement l'espacement entre les broches est compris entre 1 et 2 fois la largeur des broches, éventuellement l'espacement entre les broches est jusqu'à 5 fois la largeur des broches.

10. Dispositif d'échangeur thermique multicouche selon une quelconque revendication précédente, dans lequel l'augmentation de la section transversale du point minimal à l'extrémité extérieure est comprise entre 5 % et 50 %, éventuellement entre 10 % et 40 %, éventuellement entre 20 % et 30 %.

11. Procédé de fabrication d'un dispositif d'échangeur thermique multicouche comprenant :
la formation d'une plaque à ailettes à broches à agencer dans un empilement de plaques, chaque plaque à ailettes à broches ayant un réseau de broches d'échangeur thermique s'étendant vers l'extérieur depuis la plaque à ailettes à broches jusqu'à une extrémité extérieure de la broche ;
chaque broche comprenant une extrémité intérieure formée d'un seul tenant avec la plaque et un point médian entre les extrémités intérieure et extérieure ;
dans lequel la section transversale de la broche est plus grande au niveau de l'extrémité extérieure qu'au niveau du point médian et dans lequel une plaque adjacente est liée à la broche au niveau de l'extrémité extérieure ; et
dans lequel la section transversale de l'extrémité extérieure est plus grande que la section transversale de l'extrémité intérieure.

12. Procédé selon la revendication 11, dans lequel chaque plaque à ailettes à broches est formée par un procédé de fabrication soustractive.

13. Procédé selon la revendication 11, dans lequel chaque plaque à ailettes à broches est formée par un procédé de fabrication additive.
